# EUROPEAN PATENT SPECIFICATION

(11) **EP 2 697 903 B1**
(45) Date of publication and mention of the grant of the patent: **28.02.2018**
(21) Application number: 11719046.2
(22) Date of filing: 13.04.2011
(51) Int. Cl.: H02P 6/16, H02K 29/06

(54) **RPT SIGNAL OFFSET LEARNING SYSTEM**
LERNSYSTEM FÜR RPT-SIGNAL-OFFSET
SYSTÈME D'APPRENTISSAGE DU DÉCALAGE DE SIGNAL DE TRANSDUCTEUR DE POSITION DE ROTOR

(43) Date of publication of application: 19.02.2014
(73) Proprietor: Federal-Mogul Controlled Power Limited, Manchester Lancashire M22 5TN (GB)
(72) Inventor: TAO, Chang, Langdon Hills, Essex SS16 6NS (GB); HEGGIE, Richard, Copster Green, Blackburn BB1 9EP (GB); CRIDDLE, Mark, Chelmsford, Essex CM2 9TY (GB); MADDISON, Wayne, Finham, Coventry CV3 6QF (GB); PEARCE, David, Childswickham, Broadway WR12 7HQ (GB)
(74) Representative: CSY St Albans
(86) International application number: PCT/GB2011/050739
(87) International publication number: WO 2012/140391

(56) References cited:
- US-B1- 6 359 401

## Description

This invention relates to the measurement of the signal offset of a Rotor Position Transducer (RPT) in an electrical machine.

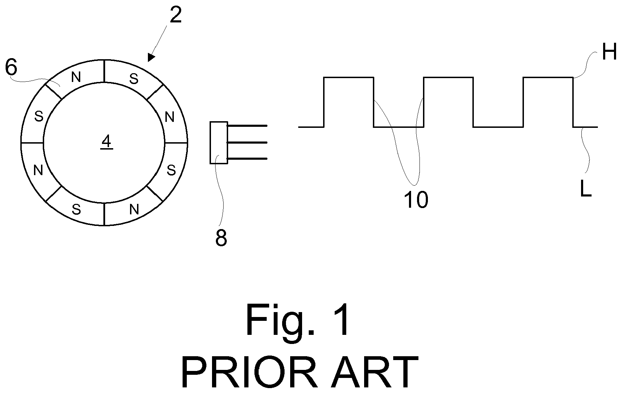

An RPT is used to measure the angular rotation of the rotor of an electrical machine. For example, Figure 1 is a schematic representation of RPT signal generation on an electrical machine 2. A magnetic ring 6 mounted on the rotor shaft 4 excites a Hall-effect magnet sensor 8 mounted on the electric circuit board (not shown) to generate rotor position information for motor control software. The North to South / South to North switching points are shown at 10, and high voltage and low voltage are indicated at H and L respectively.

Due to assembly tolerances in the magnet ring 6, rotor shaft 4, and the magnet sensor 8, the RPT signal may not be perfectly aligned to the appropriate reference point of rotor-stator geometry, leading to errors in the measurement of the RPT signal. To achieve the desired response and efficiency, such errors should be compensated for when applying control laws to energise the stator phases.

Previously, a method of assessing the signal offset of an RPT from a motor involved the following steps:
a) dissemble the electrical machine and mark a reference point on the circumference of the rotor shaft or impeller;
b) remove all control electronics, use a DC power supply directly to energise stator phase A;
c) when the rotor is locked to phase-A, mark the position on the machine housing using the reference point, (thereby identifying the "rotor locked-to-phase-A position");
d) rotate and repeat step c) for each rotor pole, until the locked-to-phase-A position has been identified for all four rotor poles;
e) re-assemble the electronics;
f) using an oscilloscope or multi-meter to monitor the RPT signal;
g) manually rotate the rotor to identify the position where the RPT signal falling edge occurs, mark the position on the machine housing using the reference point, (thereby identifying the "RPT-falling-edge position");
h) repeat step g) for each rotor pole, until the RPT-falling-edge position has been identified for all four rotor poles;
i) Measure the distance between the locked-to-phase-A positions and the RPT-falling-edge positions;
j) Using the known machine circumference and diameter, and the distances identified in step i), establish the angle of RPT signal offset for each of the four rotor poles;
Document US 6 359 401 B1 discloses a similar method. An aim of the present invention is to provide apparatus for and a method of measuring RPT signal offset in an electrical machine, which enables a simpler, faster and more accurate measurement of RPT signal offset than currently employed methods.

Accordingly the present invention provides a method for measuring the RPT signal offset of an electrical machine as claimed in claim 1 of the appended claims.

The encoder means may comprise a rotary encoder or a software encoder algorithm.

An embodiment of the present invention will now be described by way of example and with reference to the accompanying drawings in which:
Figure 2 is a schematic representation of a rotor and stator geometry of an electrical machine;
Figure 3 is a Pulse Width Modulation (PWM) profile of the A, B and C phases of the electrical machine of Figure 2;
Figure 4 is a schematic representation of a production end-of-line test rig setup for undertaking a method in accordance with the present invention comprising a rotary encoder;
Figure 5 is a table of the relationship between "PWM Walk" and rotor position in accordance with a second embodiment of the present invention; and
Figure 6 is a schematic representation of a production end-of-line test rig setup for undertaking a method in accordance with the present invention comprising a software encoder.

### RPT Signal Offset Learning with Rotary Encoder

A first embodiment of the invention comprises a method of learning the RPT signal offset from an electrical machine 12 using a controller, and encoder means comprising a rotary encoder mounted on a rotor shaft of the electrical machine.

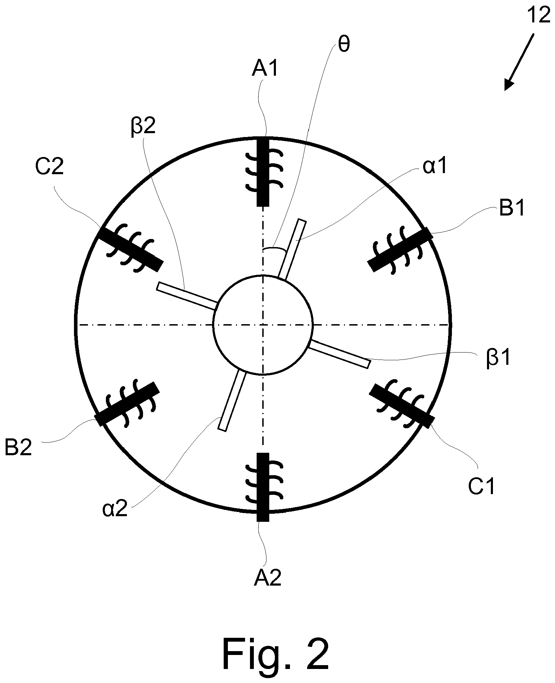

Referring to Figure 2, the electrical machine comprises six stator poles, A1, B1, C1, A2, B2, and C2, and four rotor poles, α1, β1, α2, and β2. The coils on the stator poles are connected into 3 phases; phase-A comprising A1 and A2, phase-B comprising B1 and B2, and phase-C comprising C1 and C2; i.e. the coils on A1 and A2 are always energised simultaneously, (or B1 and B2, or C1 and C2).

The control system drives the motor in regulated current mode using a controlled voltage, wherein the voltage is controlled by PWM. A voltage walk, in this case comprising a "PWM walk" is used, wherein the PWM controlled voltage being applied to a particular phase being stepped up, or stepped down, by a predetermined value, and consequently the current in the coils of the electrical machine is also controlled.

At any time, a PWM controlled voltage is applied to one phase and also to a second, adjacent phase. Initially, the PWM controlled voltage applied to the first phase is set at a predetermined maximum duty cycle value, and the PWM controlled voltage applied to the second phase is set at a predetermined minimum duty cycle value (which could be zero).

The minimum duty cycle applied to the second phase is subsequently increased in a "voltage walk", in this case a "PWM walk", i.e. the PWM controlled voltage which is being applied to the second phase is gradually increased in pre-defined steps, up to the maximum duty cycle PWM controlled voltage value. When the PWM controlled voltage being applied to the second phase reaches the maximum duty cycle value, the PWM controlled voltage being applied to the first phase is gradually decreased in another "PWM walk", i.e. the PWM controlled voltage which is being applied to the first phase is gradually decreased in pre-defined steps, down to the minimum duty cycle PWM value, and subsequently (in the case where the minimum duty cycle PWM value is not zero), to zero.

For example, initially a PWM controlled voltage is applied to phase-A at a maximum duty cycle value, and a PWM controlled voltage is applied to phase-C at a minimum duty cycle value. The PWM controlled voltage applied to phase-C is "walked up", i.e. gradually increased, up to the maximum duty cycle value. When the PWM controlled voltage being applied to phase-C reaches the maximum duty cycle value, the "voltage walk up", in this case a "PWM walk up" on phase-C stops, and the duty cycle on phase-A starts a "voltage walk down", in this case a "PWM walk down", i.e. the PWM controlled voltage being applied to phase-A is gradually decreased in pre-defined steps, until the minimum duty cycle PWM controlled value is reached, at which point the "PWM walk down" on phase-A stops.

As a result of the "PWM walk up" of phase-C and the subsequent "PWM walk down" of phase-A, the rotor is thereby moved from lock-to-phase-A to lock-to-phase-C in a controlled manner. The steps moving from phase-A to phase-C, especially at the proximity around the locked phase, can be controlled to arbitrarily small values by applying multiple "PMW walk" steps.

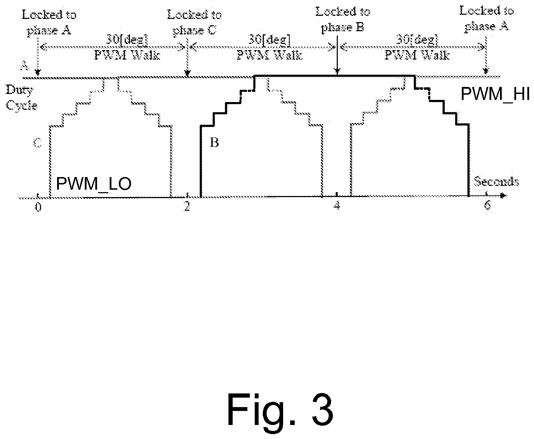

In detail, and with reference to Figure 3, the following steps are followed to achieve the PWM Walk:
1) Energise phase-A (A1 and A2) with a PWM controlled voltage, where the duty cycle is PWM_HI. Stator poles α1 and α2 are attracted to A1 and A2, respectively from their original position and stabilised at what is so-called "locked position", i.e. where the rotor is locked to the energised phase of the stator;
2) Phase A is still energised with PWM controlled voltage, duty cycle is PWM_HI. Phase-C is energised with PWM controlled voltage, duty cycle starts from PWM_LO, and is then stepped up until it reached PWM_HI;
3) Phase-C is energised with duty cycle PWM_HI voltage, phase-A is energised with a gradually reducing PWM controlled voltage from PWM_HI to PWM_LO;
4) The above procedure is repeated for phase-C and phase-B;
5) The above procedure is repeated for phase-B and phase-A;
6) The process is repeated from step 1) four times to complete a 360° rotation.

With reference to Figure 3, from step 1 to step 5, the rotor will be locked from phase-A to phase-C, then to phase-B, and finally again to phase-A. There will be a 30° stepping clock-wise when it is locked from one stator pole to the next. After 90°, it can be seen that an electrical cycle completes, β2 is locked to stator pole A1.

The rotary encoder is used in conjunction with the PWM walk above in order to ascertain the RPT signal offset from the electrical machine. The complete method of learning the RPT signal offset therefore involves the following steps:
1) Locking the rotor to phase-A, initialising the encoder driver, Encoder-Angle=0°;
2) Stepping the motor using the "PWM walk" as described above;
3) Over one revolution, recording encoder readings when RPT signal H-L transition occurs. Four angular readings will be obtained: θ1, θ2, θ3, θ4.
4) Compare θ1, θ2, θ3, 04 with the reference geometry points to calculate the RPT signal offset for each rotor pole.

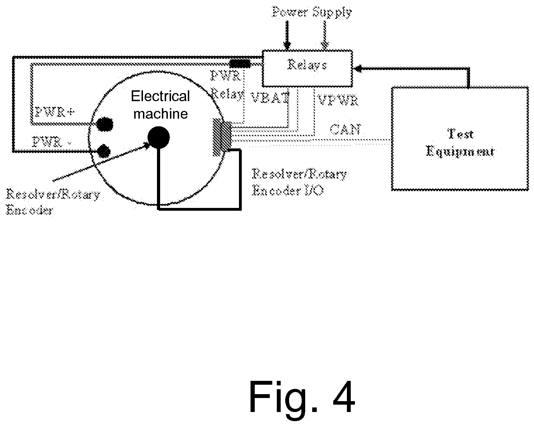

An example of a production end-of-line test rig for undertaking the above method using a rotary encoder is as illustrated schematically in Figure 4.

### RPT Signal Offset Learning with Software Encoder Algorithm

A second embodiment of the invention comprises a method of learning the RPT signal offset from an electrical machine, using a controller, and encoder means comprising a software encoder algorithm.

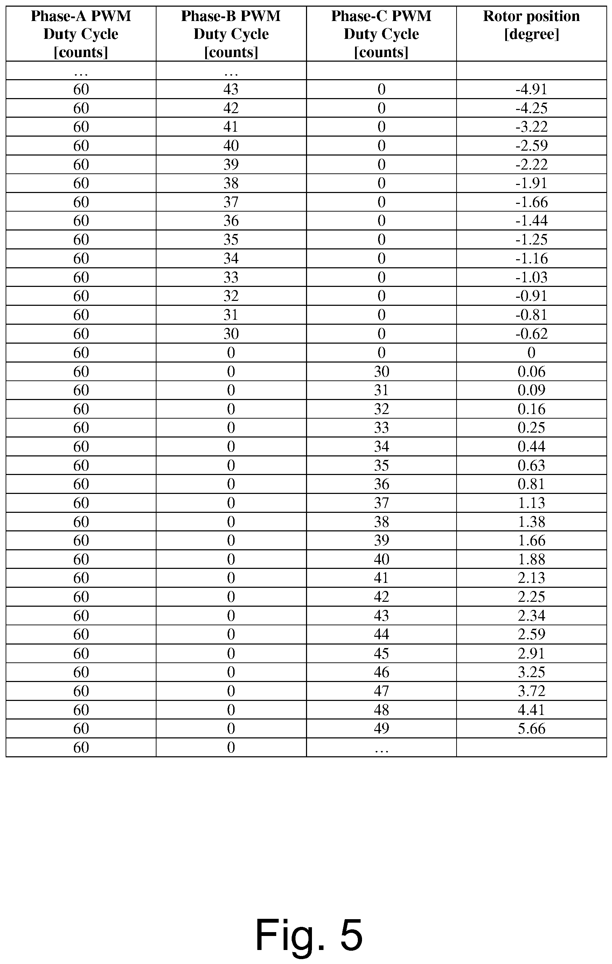

When two phases are energised with different controlled voltages (in this case PWM controlled voltages), the rotor will be stabilised at a position in between the lock-to-phase positions, for example, as shown in Figure 2. The position of the rotor is a function of the PWM duty cycle on phase-A and phase-C. At the proximity around the position of lock-to-phase-A, an empirical set of data which describes the relationship between "voltage walk", in this case "PWM Walk", and the step angles can be obtained. The PWM duty cycle count in the table of Figure 5 is based on a particular type of electrical machine. A positive rotor position means the rotor pole is after lock-to-phase-A position, a negative rotor position means the rotor pole is before lock-to-phase-A position, and lock-to-phase-A position is 0[deg], as shown in Figure 2. It can be seen that when the phase-B voltage is "walking down", in this case in a "PWM walk down", the rotor pole is moving towards lock-to-phase-A position. After it is locked to phase-A, with the phase-C voltage "walking up", in this case in a "PWM walk-up", the rotor pole is leaving phase-A, as shown in Fig. 3.

The above relationship may vary from machine to machine. The variations are mainly correlated to coil resistance which deviates current in phase coils and hence torque, which consequently varies the relationship between rotor position and the PWM duty cycles.

Test data have shown that on the same batch of production, such variation is well within the tolerance requirement on RPT signal offset accuracy.

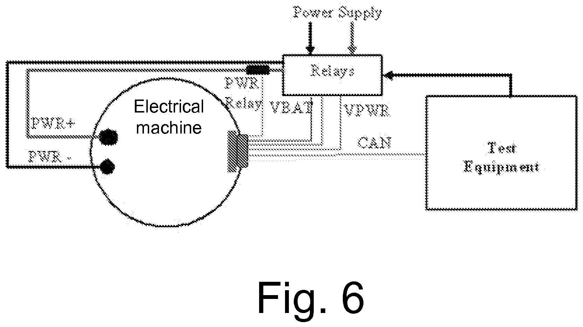

The RPT signal offset learning procedure using the software encoder, as illustrated schematically in Figure 6, comprises the following steps:
1) Locking the rotor to Phase-A;
2) Stepping the motor using the "PWM walk" as described above;
3) Over one revolution, record phase-A, phase-B and phase-C PWM duty cycle counts when RPT signal H-L transition happens. Four sets of readings corresponding to four RPT signal transitions will be obtained: C1, C2, C3, C4.
4) Referring to the table of Figure 5, C1, C2, C3 and C4 values will provide corresponding RPT signal offset values for each rotor pole.

An example of a production end-of-line test rig for undertaking the above method using a software encoder is as illustrated schematically in Figure 6.

In alternative embodiments, other means of motor control could be used, for example direct current limiting. Although the method discussed above is based on a 3-phase 4-6 rotor-stator machine, the application of the technology is not limited to this type of machine.

In the above embodiments, pulse width modulation (PWM) is used as a means for controlling voltage. In other embodiments, any other suitable means for controlling voltage in a multiphase machine, in which the current flowing in the coils can be modulated, may be used. Other suitable means include current chopping and torque control.

## Claims

1. A method for measuring a Rotor Position Transducer signal offset with respect to reference points in the rotor-stator geometry in an electrical machine comprising pairs of adjacent phases;
the method comprising the steps of:
a) an initial step, comprising applying a controlled voltage of a predetermined maximum duty cycle value to a first phase, and simultaneously applying a controlled voltage of a predetermined minimum value to a phase adjacent the first phase;
b) a voltage walk-up step, comprising increasing the duty cycle being applied to the phase adjacent to the first phase in predefined steps until the duty cycle being applied to the phase adjacent the first phase reaches the predetermined maximum value;
c) a voltage walk down step, comprising decreasing the duty cycle being applied to the first phase in predefined steps until the duty cycle being applied to the first phase reaches zero;
d) repeating the above steps a) to c) for each pair of adjacent phases of the electrical machine;
e) when RPT signal transition occurs, using encoder means to determine the RPT signal offset for each rotor pole (α1, α2, β1, β2) of the electrical machine.

2. A method as claimed in claim 1 wherein the voltage is controlled by Pulse Width Modulation (PWM).

3. A method as claimed in claim 1 wherein the voltage is controlled by current chopping.

4. A method as claimed in claim 1 wherein the voltage is controlled by torque control.

5. A method for measuring a Rotor Position Transducer signal offset as claimed in claim 1 or claim 2 wherein the encoder means comprises a software encoder algorithm; wherein the Rotor Position Transducer signal offset for each rotor pole is compared to pre-determined values to provide corresponding Rotor Position Transducer signal offset values for each rotor pole.

## Patentansprüche

1. Verfahren zum Messen eines Drehgebersignalversatzes (Rotor Position Transducer signal offset) in Bezug auf Referenzpunkte in der Rotor-Stator-Geometrie in einer elektrischen Maschine, die Paare benachbarter Phasen umfasst;
wobei das Verfahren die folgenden Schritte umfasst:
a) einen Anfangsschritt, der das Anlegen einer gesteuerten Spannung eines vorbestimmten maximalen Arbeitszykluswerts zu einer ersten Phase umfasst und gleichzeitig das Anlegen einer gesteuerten Spannung eines vorbestimmten minimalen Werts an eine Phase, die benachbart zu der ersten Phase ist;
b) ein Spannungserhöhungsschritt, der das Erhöhen in vordefinierten Schritten des Arbeitszyklus umfasst, der an die Phase angelegt wird, die benachbart zu der ersten Phase ist, bis der Arbeitszyklus, der an die Phase angelegt ist, die benachbart zu der ersten Phase ist, den vorbestimmten maximalen Wert erreicht;
c) einen Spannungsverringerungsschritt, der das Verringern in vorbestimmten Schritten des Arbeitszyklus umfasst, der an die erste Phase angelegt ist, bis der Arbeitszyklus, der an die erste Phase angelegt ist, den Wert Null erreicht;
d) Wiederholen der obigen Schritte a) bis c) für jedes Paar benachbarter Phasen der elektrischen Maschine;
e) Verwenden eines Kodierungsmittels, um den RPT-Signalversatz für jeden Rotorpol (α1, α2, β1, β2) der elektrischen Maschine zu bestimmen, wenn ein RPT-Signalübergang auftritt.

2. Verfahren nach Anspruch 1, wobei die Spannung durch eine Pulsweitenmodulation (PWM) gesteuert wird.

3. Verfahren nach Anspruch 1, wobei die Spannung durch einen Stromabriss gesteuert wird.

4. Verfahren nach Anspruch 1, wobei die Spannung durch eine Drehmomentsteuerung gesteuert wird.

5. Verfahren zum Messen eines Drehgebersignalversatzes nach Anspruch 1 oder Anspruch 2, wobei das Kodierungsmittel einen Softwarekodierungsalgorithmus umfasst; wobei der Drehgebersignalversatz für jeden Rotorpol mit vorbestimmten Werten verglichen wird, um entsprechende Drehgebersignalversatzwerte für jeden Rotorpol bereitzustellen.

## Revendications

1. Procédé permettant de mesurer un décalage de signal de transducteur de position de rotor par rapport à des points de référence dans la géométrie du rotor et du stator d'une machine électrique comprenant des paires de phases adjacentes ;
ledit procédé comprenant les étapes de :
a) une étape initiale, comprenant l'application d'une tension régulée d'une valeur de rapport cyclique maximale préétablie à une première phase et simultanément l'application d'une tension régulée d'une valeur minimale préétablie à une phase adjacente de la première phase ;
b) une étape d'augmentation de tension, comprenant l'accroissement du rapport cyclique appliqué à la phase adjacente à la première phase en étapes prédéfinies jusqu'à ce que le rapport cyclique appliqué à la phase adjacente à la première phase atteigne la valeur maximale préétablie ;
c) une étape de diminution de tension comprenant la décroissance du rapport cyclique appliquée à la première phase en étapes prédéfinies jusqu'à ce que le rapport cyclique appliqué à la première phase atteigne zéro ;
d) la répétition des étapes ci-dessus de a) à c) pour chaque paire de phases adjacentes de la machine électrique ;
e) lorsqu'une transition du signal de transducteur de position de rotor se produit, l'utilisation d'un moyen de codage pour déterminer le décalage de signal de transducteur de position de rotor pour chaque pôle de rotor (α1, α2, β1, β2) de la machine électrique.

2. Procédé selon la revendication 1, ladite tension étant régulée par une modulation de largeur d'impulsion (PWM).

3. Procédé selon la revendication 1, ladite tension étant régulée par un découpage du courant.

4. Procédé selon la revendication 1, ladite tension étant régulée par une régulation du couple.

5. Procédé permettant de mesurer un décalage de signal de transducteur de position de rotor selon la revendication 1 ou 2, ledit moyen de codage comprenant un algorithme de codage de logiciel ; ledit décalage de signal de transducteur de position de rotor pour chaque pôle du rotor étant comparé aux valeurs préétablies pour fournir les valeurs de décalage de signal de transducteur de position de rotor correspondantes pour chaque pôle de rotor.
